# EUROPEAN PATENT APPLICATION

(11) **EP 4 300 952 A1**
(43) Date of publication of application: **03.01.2024**
(21) Application number: 22181191.2
(22) Date of filing: 27.06.2022
(51) Int. Cl.: H04N 13/317, H04N 13/351, H04N 13/305, H04N 13/327, H04N 17/00

(54) **DETERMINING SLANT AND PITCH OF AN AUTOSTEREOSCOPIC DISPLAY**

(71) Applicant: Ultra-D Coöperatief U.A., 5657 HJ Eindhoven (NL)
(72) Inventor: BARENBRUG, Bart Gerard Bernard, 5657 HJ Eindhoven (NL)
(74) Representative: DeltaPatents B.V.

(57) **Abstract**

A system and method are provided for determining a slant and optionally a pitch distance of an autostereoscopic display by generating and displaying a test pattern on the autostereoscopic display, capturing one or more images of the displayed test pattern, and determining the slant by determining a first phase at a first position in the image, determining a second phase at a second position in the image, and determining the slant of the optical elements based on a difference between the first phase and the second phase. Advantageously, the first position and the second position are horizontally and vertically offset from each other in accordance with an assumed value of the slant. This allows the slant measurement to be less susceptible to errors in the assumed pitch distance. In particular, the slant may be determined first, largely independent of the pitch distance, after which the pitch distance may be determined on the basis of the determined slant. Thereby, the slant and optionally the pitch distance may be determined more accurately and/or faster.

## Description

### FIELD OF THE INVENTION

The invention relates to a system and a method for determining a slant, and optionally a pitch distance, of an autostereoscopic display. The invention further relates to a computer-readable medium comprising instructions arranged to cause a processor system to perform the method.

### BACKGROUND OF THE INVENTION

Increasingly, display devices such as televisions, tablets and smartphones comprise 3D displays to provide a user with a perception of depth when viewing content on such a device. Autostereoscopic displays provide stereoscopic perception of depth without the viewer needing to wear polarized, color-filter-based or shutter-based glasses. For that purpose, autostereoscopic displays comprise optical components, such as array of optical elements, which enable the display to emit a viewing cone from each given point on the 3D display, with the viewing cone comprising at least a left view and a right view of a scene. This enables the viewer to see a different image with each eye when positioned accordingly.

Certain types of autostereoscopic displays, sometimes specifically referred to as 'automultiscopic' displays, provide a series of views of a scene represented by the 3D image data to a viewer in what is typically referred to as a viewing cone. This allows the viewer to assume multiple positions in the viewing cone, e.g., to experience experiencing motion parallax while still obtaining a stereoscopic perception of the scene. Some displays may emit such series of views in each of a series of repeated viewing cones.

US6064424 describes an example of an autostereoscopic display with an array of parallel lenticular elements overlying the display, in which the lenticular elements are slanted with respect to the display pixel columns. The slant is said to cause the reduction in experienced display resolution to be shared between both horizontal and vertical resolution.

To display content on an autostereoscopic display having an array of optical elements, an output image may be generated by the autostereoscopic display, or a device connected thereto, on the basis of the 3D image data. This may involve a 'interleaving', 'weaving' or 'interdigitation' step in which it is determined for each display element of the display which image data from which view is to be displayed by the display element. Such interleaving normally takes into account the type of array of optical elements and its configuration in the display, which may include the slant of the optical elements with respect to the display panel and the pitch distance between optical elements. The slant may be expressed as or in relation to the angle of the main longitudinal axis of the optical elements to the column direction of the array of display elements but may also be expressed differently, e.g., in relation to the row direction of the array of display elements.

While an autostereoscopic display may be designed to have a certain slant and pitch distance, manufacturing tolerances may cause the actual values of the slant and/or pitch distance to deviate from their nominal values selected during the design phase. It is therefore desirable to be able to measure the slant and the pitch distance of an autostereoscopic display so that the interleaving can be adapted to their actual values.

The paper "3D Display Calibration by Visual Pattern Analysis" by Hwang et al., available https://arxiv.org/abs/1606.07166 describes a display calibration method. In this method, a pattern image is displayed on the panel and a camera takes its pictures twice at different positions. Then, based on a quantitative model, display parameters including the pitch and slanted angle are determined from the observed patterns in the captured images.

Disadvantageously, the measurement accuracy obtained by Hwang et al. for at least the slant is insufficient for high-resolution autostereoscopic displays.

It is an object of the invention to be able to measure at least the slant, and optionally the pitch distance, of an autostereoscopic display in a more accurate manner.

### SUMMARY OF THE INVENTION

The following aspects of the invention relate to an autostereoscopic display, wherein the autostereoscopic display comprises:
- a display panel comprising an array of display elements; and
- an array of elongated optical elements for redirecting light emitted by the display elements in mutually different directions, the optical elements being mutually arranged substantially in parallel at a pitch distance and oriented with their main longitudinal axis at a slant relative to the array of display elements.

In accordance with a first aspect of the invention, a method is provided for determining a slant of the autostereoscopic display. The method comprises:
- assigning a phase to each display element based on an estimated value for the pitch distance and an estimated value for the slant, wherein the phase is indicative of a direction in which the light emitted by the respective display element is redirected;
- based on said assigned phases, generating display data which comprises uniquely identifiable image content for each phase of a set of assigned phases;
- outputting the display data to the autostereoscopic display for display;
- capturing one or more images of the display panel when the display data is displayed by the autostereoscopic display;
- determining the slant by analyzing said one or more captured images, wherein the analyzing of the one or more captured images comprises:
   - at a first position on the display panel, determining a first phase based on the uniquely identifiable image content shown at the first position;
   - at a second position on the display panel, determining a second phase based on the uniquely identifiable image content shown at the second position, wherein the first position and the second position are horizontally and vertically offset from each other in accordance with the estimated value of the slant; and
   - determining the slant of the optical elements based on a difference between the first phase and the second phase.

In accordance with a further aspect of the invention, transitory or non-transitory computer-readable medium is provided, the medium comprising data representing instructions arranged to cause a processor system to perform the method.

In accordance with a further aspect of the invention, a system is provided for determining a slant of the autostereoscopic display. The system comprises:
- a display output interface to the autostereoscopic display;
- a camera interface to a camera positioned to capture images of the display panel of the autostereoscopic display;
- a processing subsystem configured to:
   - assign a phase to each display element based on an estimated value for the pitch distance and an estimated value for the slant, wherein the phase is indicative of a direction in which the light emitted by the respective display element is redirected;
   - based on said assigned phases, generate display data which comprises uniquely identifiable image content for each phase of a set of assigned phases;
   - via the display output interface, output the display data to the autostereoscopic display for display;
   - via the camera interface, capture one or more images of the display panel when the display data is displayed by the autostereoscopic display;
   - determine the slant by analyzing said one or more captured images, wherein the analyzing of the one or more captured images comprises:
      - at a first position on the display panel, determining a first phase based on the uniquely identifiable image content shown at the first position;
      - at a second position on the display panel, determining a second phase based on the uniquely identifiable image content shown at the second position, wherein the first position and the second position are horizontally and vertically offset from each other in accordance with the estimated value of the slant; and
      - determining the slant of the optical elements based on a difference between the first phase and the second phase.

The above measures involve characterizing an autostereoscopic display which comprises a display panel, such as an LCD, OLED or microLED panel. Stacked on top of the display panel, that is, over the display panel's light-emitting side, an array of elongated optical elements may be arranged for redirecting the light emitted by the display elements of the display panel in mutually different directions. The optical elements may be mutually arranged substantially in parallel at a pitch distance and oriented with their main longitudinal axis at a slant relative to the array of display elements. Autostereoscopic displays of the type described in this paragraph may be known per se. For example, US6064424 describes an example of such a display.

It may be desirable to determine the slant, and optionally the pitch distance, of such an autostereoscopic display. The above measures make use of initial estimated values for the slant and the pitch distance to be able to determine the actual value of the slant and optionally the pitch distance in a more accurate manner. The initial estimated values may for example be nominal values for the slant and pitch distance as obtained from a manufacturing specification. As the actual values of the slant and pitch distance are likely to deviate from the initial estimated values, a test pattern is generated and shown on the display. The test pattern comprises for at least some of the phases, on the basis of which the display may be addressed, uniquely identifiable image content. To generate the test pattern, the estimated values for the slant and the pitch distance may be used to be able to determine which display element corresponds to which phase(s), so as to assign the respective uniquely identifiable image content to respective display elements. The phase may then be measured at at least two locations (i.e., positions) onscreen by capturing one or more images of the light-emitting side of the display and by analyzing the captured image(s) so as to identify the uniquely identifiable image content at both locations. As is known per se, the difference in phase at the two locations may be indicative of a difference between the actual values of the slant and pitch distance and the estimated values of the slant and pitch distance. Conventionally, the estimated values of the slant and the pitch distance may be corrected based on the difference, e.g., in an iterative process, so as converge with the estimate of the slant and the pitch distance from their initial estimated values to an approximation of their actual values.

Disadvantageously, any observed difference in phase at the two locations onscreen may be due to a mismatch in slant, that is, due to a mismatch between the estimated value and the actual value of the slant, but also due to a mismatch in pitch distance, or both. As a result, it may not be immediately evident whether the estimated value of the slant should be corrected, or the estimated value of the pitch distance, or both. This may cause the determined slant and pitch distance to be less accurate than desired, or when determined iteratively, the determination to be slow(er) to converge.

The above measures involve measuring the phase at two or more different locations on screen, which locations may be horizontally and vertically offset from each other in accordance with the estimated value of the slant. Thereby, the locations at which the phases are measured lie on a line which is slanted in accordance with the estimated value of the slant. The horizontal and vertical offset of the locations may exactly correspond to the estimated value of the slant, but also approximately, e.g., within a range thereof. The phase difference measured at the two or more different locations onscreen may then be used to correct the estimated value of the slant, instead of simultaneously correcting the estimated values of the slant and pitch distance. This allows the slant measurement to be decoupled, at least to a degree, from the pitch measurement. In particular, the slant may be determined first, largely independent of the pitch distance, after which the pitch distance may be determined on the basis of the determined slant. This way, the slant and optionally the pitch distance may be determined more accurately, and when determined iteratively, in a fast(er) manner.

Exemplary experiments show that one magnitude of improvement in accuracy is obtained over the method of "3D Display Calibration by Visual Pattern Analysis" by Hwang et al. This makes the system and method as claimed particularly suitable for high-resolution displays, such as 4K and 8K displays and beyond.

Optionally, the first phase and the second phase are each determined based on the uniquely identifiable image content in respective measurement areas at the respective positions on the display panel. Instead of determining the phases only at select locations onscreen, the phases may be determined in measurement areas which may be defined around the select locations, for example based on an average or majority selection of the uniquely identifiable image content in the respective measurement areas. This way, the phases may be determined more reliably than when only basing a phase measurement on a single location.

Optionally, the first position and the second position are vertically positioned in respectively a top half and a bottom half of the display panel, preferably in a top third and a bottom third of the display panel, more preferably in a top quarter and a bottom quarter of the display panel. As phase errors due to errors in the estimated values of the slant and pitch distance accumulate horizontally, e.g., from a first column to a last column of the display panel, and vertically, e.g., from a first row to a last row of the display panel, a larger error may be expected when the locations at which the phase is measured are spaced apart vertically. By spacing the locations appropriately apart, the sensitivity to errors may be increased and thereby the accuracy of the determined slant.

Optionally, the first position and the second position are horizontally positioned in respectively a left half and a right half of the display panel, preferably in a left third and a right third of the display panel, more preferably in a left quarter and a right quarter of the display panel. While the positions described in the preceding paragraph are well suited for slants between vertical and 45 degrees or up to a diagonal of the display, these positions may be less suited for slants beyond that and up to horizontal. For such slants, different positions along the horizontal axis may be preferred, such as the abovementioned positions on the left side and right side of the display panel.

Optionally, the slant is determined iteratively by:
- if the difference between the first phase and the second phase exceeds a threshold:
   adjust the estimated value of the slant based on the difference;
   reposition the first position and/or the second position to adjust the offset to said adjusted estimated value of the slant; and
   redetermine the first phase and/or the second phase at said repositioned first position and/or second position;
- if the difference between the first phase and the second phase is below a threshold, output the estimated value of the slant as a determined slant.

Optionally, the method comprises, and the processing subsystem is further configured for, at one or more intermediate positions between the first position and the second position, determining one or more intermediate phases based on the uniquely identifiable image content shown at the one or more intermediate positions, wherein the difference is a difference measure applied to the first phase, the second phase and the one or more intermediate phases. By measuring the phase at more than two locations onscreen, e.g., at three or more locations, the accuracy by which the slant is determined may be further improved. The above relates to the following: for an autostereoscopic display with a repeated viewing cone, an observed difference of zero between the first phase and the second phase does not guarantee that the estimated and actual slant are the same, as one may only measure the phase modulo the pitch distance. Typically, when measuring phase differences horizontally, one may assume that phase differences are less than one pitch distance, e.g., due to manufacturing requirements (e.g., accuracies required for bonding). However, when the phase difference is determined between locations which are also vertically offset, phase differences may exceed those represented by one pitch distance. In such situations, it may be advantageous to measure the phase at an intermediate location along the line from the first location to the second location. Namely, when the estimated slant matches the actual slant, one should observe the same phase at all three locations. A mismatch of the phase at all three locations may therefore indicate an error in the estimation of the slant. Furthermore, by selecting the third location asymmetrically between the first location and the second location, that is, not directly in the middle of both locations, it may be avoided that a zero difference is detected in cases where the actual phase difference is a multiple of 2x the pitch distance. Preferably, the third location is located at a fraction *n*/*d* of the distance between both locations, where d is large even when all common factors in *n* and d have been removed. Optionally, more than three locations may be used to further increase the accuracy of determining the value of the slant.

Optionally, the method comprises, and the processing subsystem is further configured for, determining the pitch distance based on said determined slant. Having determined the slant, the pitch distance may be determined in a known manner using the determined slant. Namely, when generating a test pattern for determining the pitch difference, the determined slant may be used in the phase calculation. This way, observed phase differences may be primarily due to differences between the estimated value and the actual value of the pitch distance and not or to a lesser degree due to differences between the estimated value and the actual value of the slant. This way, the pitch distance may be determined more accurately and, if determined iteratively, quicker.

Optionally, determining the pitch distance comprises:
- reassigning a phase to each display element based on the estimated value for the pitch distance and the determined slant;
- based on the reassigned phases, generating further display data which comprises uniquely identifiable image content for each phase of a set of the reassigned phases;
- outputting the further display data to the autostereoscopic display for display;
- capturing one or more further images of the display panel when the display data is displayed by the autostereoscopic display;
- determining the pitch distance of the optical elements by analyzing said one or more further captured images, wherein the analyzing of the one or more further captured images comprises:
   at a first further position on the display panel, determining a first further phase based on the uniquely identifiable image content shown at the first further position;
   at a second further position on the display panel, determining a second further phase based on the uniquely identifiable image content shown at the second further position, wherein the second further position is offset from the first further position;
   determining the pitch distance of the optical elements based on a difference between the first further phase and the second further phase.

Optionally, the offset between the first further position and the second further position differs horizontally from the slant.

Optionally, the uniquely identifiable image content comprises a different greyscale and/or a different color for each phase of the set of assigned phases.

Optionally, the method comprises, and the processing subsystem is further configured for, obtaining the estimated value of the slant and/or the estimated value of the pitch distance from a target specification used for the manufacture of the autostereoscopic display.

Optionally, the array of elongated optical elements is a lenticular lens sheet.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a 3D display comprising a display panel and an array of optical elements configured to emit a series of views in each of a series of viewing cones;
Fig. 2 shows a cross-section of the array of optical elements;
Fig. 3 shows the array of optical elements being slanted with respect to the display panel by a slant angle θ°;
Fig. 4 shows a system for determining a slant of an autostereoscopic display;
Fig. 5 serves to illustrate that a deviation between the nominal values and the actual values of the pitch distance affects the determination of the slant;
Fig. 6 shows the determination of the slant using measurement areas which are horizontally and vertically offset in accordance with a nominal value of the slant;
Fig. 7 shows a method for determining a slant of an autostereoscopic display;
Fig. 8 shows a computer-readable medium comprising data.

It should be noted that the figures are purely diagrammatic and not drawn to scale. In the figures, elements which correspond to elements already described may have the same reference numerals.

### List of reference numbers and abbreviations

The following list of reference numbers is provided for facilitating the interpretation of the drawings and shall not be construed as limiting the claims.
- 0-5: view
- 10-12: viewing cone
- 20: series of viewing cones
- 30: stereoscopic viewing position
- 120: processor system
- 122: interleaved display data
- 140: 3D display
- 150: display panel
- 160: array of optical elements
- 162: substrate
- 164: lenticule

- 200: system for determining slant of autostereoscopic display
- 220: processing subsystem
- 240: camera interface
- 250: camera
- 252: camera data
- 260: display output interface
- 262: interleaved display data

- 300, 301: measurement window
- 310: slanted line through center of first measurement window
- 312: slanted line through center of second measurement window
- 314: middle line

- 400: method for determining slant of autostereoscopic display
- 410: assigning phases to display elements
- 420: generating interleaved display data
- 430: outputting display data to display
- 440: capturing image(s)
- 450: determining slant by analyzing captured image(s)
- 452: determining first phase at first position
- 454: determining second phase at second position
- 456: determining slant based on phase difference

- 500: computer-readable medium
- 510: non-transitory data

### DETAILED DESCRIPTION OF EMBODIMENTS

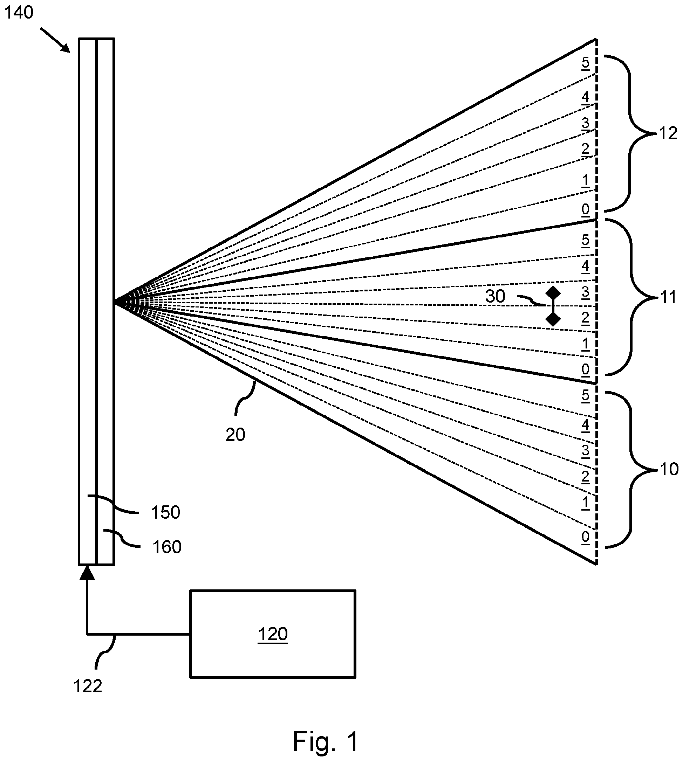

Fig. 1 shows a 3D display 140 in the form of an autostereoscopic 3D display which is configured for enabling stereoscopic viewing of content displayed thereon without a need for the user to wear glasses. For enabling the stereoscopic viewing, the 3D display 140 comprises a display panel 150 which typically comprises an array of light emitting or light modulating elements. Such type of elements may elsewhere also be referred to as 'display elements'. The 3D display 140 is further shown to comprise an array of optical elements 160 for redirecting light generated by the display panel 150 into different directions. Although not shown explicitly in Fig. 1, the array of optical elements 160 may comprise or consist of an array of elongated optical elements, such as lenticular elements. The display panel 150 may be suitably arranged and cooperative with the array of optical elements 160 such that a series of views 0-5 are emitted from the 3D display 140 in the form of a viewing cone 11, which viewing cone is repeated, resulting in a series of viewing cones 20 being emitted. In this respect, it is noted that for sake of illustration, Fig. 1 shows the series of views to comprise six views 0-5 and the 3D display 140 to emit the views 0-5 in the viewing cone 11 and in two adjacent viewing cones 10, 12. It will be appreciated, however, that the series of views may be comprised of any number of views, e.g., 2, 5, 10, 20, 30, etc., and that the repetition of the viewing cones may continue beyond the adjacent viewing cones 10, 12.

The series of views 0-5 may show a series of images. Thus, the viewer may perceive, when viewing one of the series of views 0-5, a respective one of the series of images. The series of images may, in terms of image content, correspond to a camera facing a scene and moving from left to right in front of, and relative to, said scene. As such, a viewer positioned at viewing position 30 within the viewing cone 11 may perceive two different views 2, 3 and may thereby obtain stereoscopic viewing of said scene. It is noted that the series of views may comprise, or may be entirely comprised of, fractional views.

It is noted that 3D displays of the above configuration, and the manner of processing a series of images for display as the series of views, are in itself known. For example, US 6,064,424 discloses an autostereoscopic display apparatus having lenticular elements and discusses the relationship between display elements and the lenticular elements. US 6,064,424 also discloses that the lenticular elements may be arranged substantially in parallel at a pitch distance p and oriented with their main longitudinal axis at a slant angle s relative to the array of display elements. The pitch distance (elsewhere also simply referred to as 'pitch') and slant angle (elsewhere also simply referred to as 'slant) represent parameters characterizing the optical design of the 3D display 140. The slant may be defined in various ways, for example relative to a column direction of the array of display elements or relative to a row direction of the array of display elements.

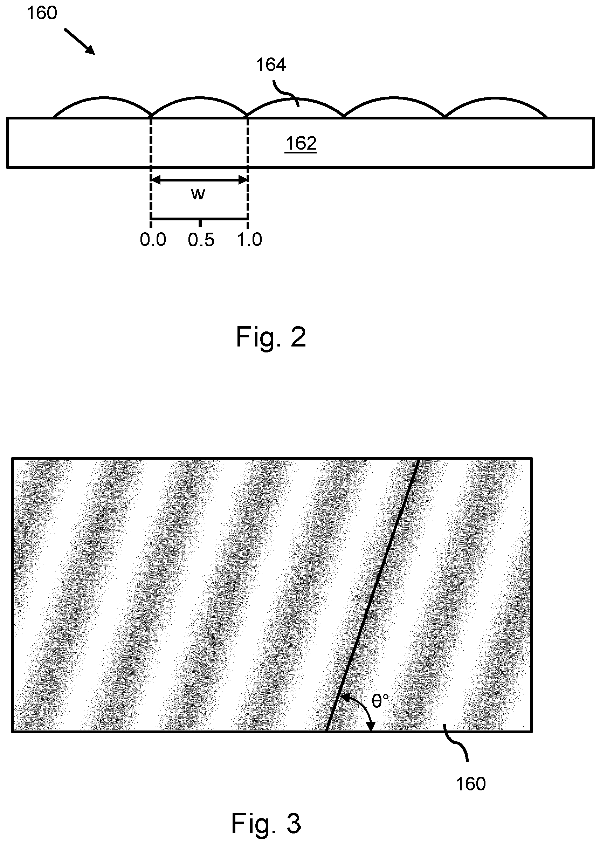

**Fig.** 2 shows a cross-section of the array of optical elements 160. In this example, the array of optical elements 160 is constituted by a lenticular sheet comprising a substrate 162 having a profiled surface defining an array of lenticular elements. Each lenticular element 164 may be an elongated cylindrical lens element, with the array of optical elements being a 1-dimensional array formed by the lenticular elements arranged in parallel. Fig. 2 shows a cross-section of the array 160 parallel to the rows of the pixel grid of the display panel. It is noted that such an array of optical elements 160 is known per se. It is further noted that the array of optical elements 160 may also take any other suitable form, e.g., a plurality of multi-faceted lens elements, a two-dimensional array, etc. Fig. 2 further illustrates the pitch distance with the denotation 'w'. The pitch distance is often expressed in terms of the number of pixels or sub-pixels. The value of the pitch distance may be selected based on the dimensions of the underlying pixels for a certain nominal viewing distance.

**Fig. 3** shows the array of optical elements being slanted with respect to the display panel by a slant angle θ°. It is noted that the slant angle may be defined in degrees but also in radians or in any other quantity, for example in relation to the number of horizontal display elements and vertical display elements traversed by an optical element, which has an arc-tan relation to the slant angle expressed in radians. In general, the slant may relate to the angle at which the optical elements are arranged with respect to the pixel grid. The pitch and slant together may be used to determine for each sub-pixel its phase with respect to the lens, that is, through which part of the lens the underlying pixel grid is observed by the viewer. As illustrated in Fig. 2, the phase may for example be defined to be representative of a horizontal position of a respective display element relative to an optical element redirecting the light emitted by the respective display element, for example assuming a value of 0.0 for all the way through the left of the lens, 0.5 for the center of the lens, and 1.0 for the right side of the lens, with all phase values in-between, with the understanding that the exact phase is further dependent on the viewing distance, the lateral position and the distance between the array of optical elements and the sub-pixels below.

The phase of a sub-pixel may determine in which direction its light is focused by the lens, so the image content for the sub-pixel should be chosen matching that direction. From the point of view of the viewer, the viewer should see a consistent image corresponding to his/her viewing direction across the whole screen. In other words, image content for the same phase should be observed by the viewer allover the screen. The phase may be determined based on the pitch and slant. However, if the values of the pitch or slant used for rendering deviate from the actual values of the pitch and slant, the viewer may not see a consistent image, with image content meant for different phases/directions becoming visible at different locations across the screen. It is therefore desirable to be able to characterize the slant and optionally the pitch distance of an autostereoscopic display in an accurate manner.

Briefly speaking, the following describes a system and method for determining a slant and optionally a pitch distance of an autostereoscopic display. For that purpose, the system and method generate and display a test pattern on the autostereoscopic display, capture one or more images of the displayed test pattern, and determine the slant by determining a first phase at a first position in the one or more captured images, determining a second phase at a second position in the one or more captured images, and determining the slant of the optical elements based on a difference between the first phase and the second phase. Advantageously, the first position and the second position are horizontally and vertically offset from each other in accordance with an assumed value of the slant. This allows the slant measurement to be less susceptible to errors in the assumed pitch distance. In particular, the slant may be determined first, largely independent of the pitch distance, after which the pitch distance may be determined on the basis of the determined slant. Thereby, the slant and optionally the pitch distance may be determined more accurately and/or faster in an iterative process.

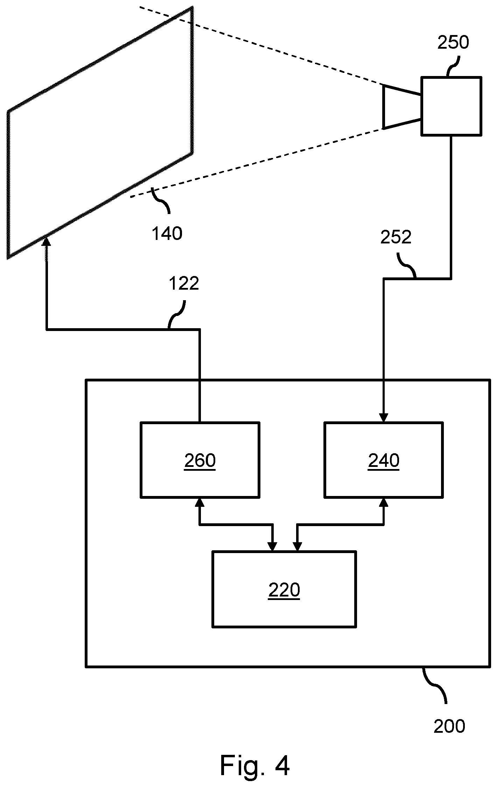

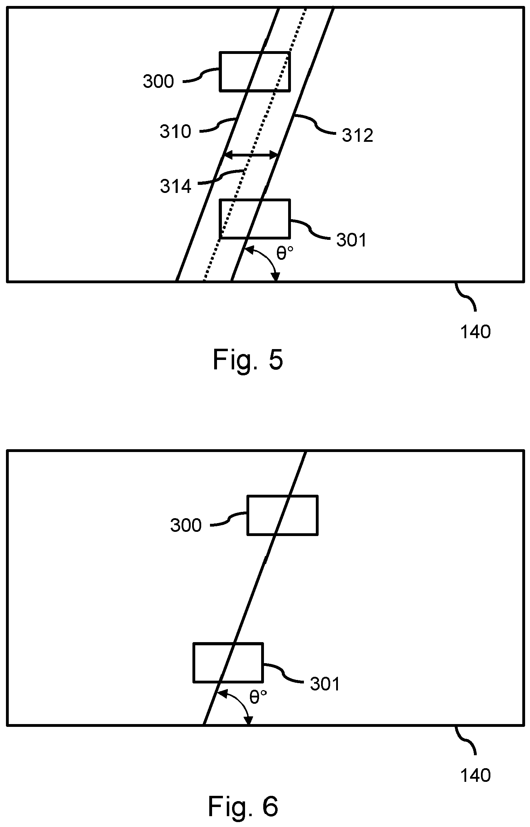

**Fig. 4** shows a system 200 for determining a slant of an autostereoscopic display 140. The autostereoscopic display 140 may for example be of a type as described elsewhere in this specification. The system 200 may comprise a display output interface 260 to the autostereoscopic display 140 and a camera interface 240 to a camera 250 positioned to capture images of the display panel of the autostereoscopic display. The system 200 may further comprise a processing subsystem 220 configured to assign a phase to each display element based on an estimated value for the pitch distance and an estimated value for the slant, generate display data 262 which comprises uniquely identifiable image content for each phase of a set of assigned phases, via the display output interface 260, output the display data 262 to the autostereoscopic display 140 for display, via the camera interface 240, capture one or more images 252 of the display panel when the display data is displayed by the autostereoscopic display, and determine the slant by analyzing said one or more captured images, wherein the analyzing of the one or more captured images comprises, at a first position on the display panel, determining a first phase based on the uniquely identifiable image content shown at the first position, at a second position on the display panel, determining a second phase based on the uniquely identifiable image content shown at the second position, and determining the slant of the optical elements based on a difference between the first phase and the second phase. Herein, the first position and the second position may be horizontally and vertically offset from each other in accordance with the estimated value of the slant, which may be advantageous for reasons as explained with reference to Figs. 5-6.

**Fig. 5** serves to illustrate that a deviation between the nominal values and the actual values of the pitch distance affects the determination of the slant. As already explained elsewhere, it may be desirable to be able to characterize the slant and optionally the pitch distance of an autostereoscopic display in an accurate manner. Such characterization may for example involve rendering image content that appears different for all or at least a subset of phases, for example by varying the color as described in Jurk, Silvio & Kuhlmey, Mathias & Duckstein, Bernd & de la Barre, Rene. (2016). Electronical correction of misalignments between optical grid and pixel panel on autostereoscopic displays*,* or by using image content which is specific for a particular phase and which varies over time. It may be preferable to be able to measure the phase locally in multiple areas that are sufficiently spaced apart. The phase measurements in those areas may then be compared to determine if, and if so, how the phase changes over the screen, which is an indication if the values of the slant and pitch distance used to render the image content match the actual optics, that is, match the actual values of the slant and pitch distance. For example, if the observed phase in a small area on the left side of the screen is the same as the observed phase on the right side of the screen, this may be an indication that the estimated value of the pitch distance is correct, or at least within a small range of the actual value of the pitch distance.

To characterize the pitch distance, a horizontal offset between the measurement areas may be used, since a difference between the actual pitch distance and the initial estimated pitch distance (which may for example be the assumed pitch distance, e.g., based on a manufacturing or design specification) results in a horizontal and non-constant deviation of the phase from its assumed value; the phase deviation may be space variant. For example, for an autostereoscopic display which is designed to have a pitch distance of 5 sub-pixels but where the actual pitch distance is 1% off from the designed pitch distance, say 5.01, after 500 sub-pixels, the phase may have cycled through a complete extra cycle of 5 subpixels, having gone through the whole range of the phase. This phase deviation may be the same for every line, so a horizontally phase deviation pattern arises. If the deviation is rather in the slant than in the pitch distance, similarly, a phase deviation pattern emerges, but now in the vertical direction. Accordingly, it may be preferable to measure the phase at locations which are horizontally offset so as to be able to characterize deviations in pitch distance, while it may be preferable to measure the phase at locations which are vertically offset so as to be able to characterize deviations in slant.

With continued reference to Fig. 5, which shows the light-emitting side of the autostereoscopic display 140, two measurement areas 300, 301 are shown which are vertically offset and cover most of the height of the screen to gain precision. The diagonal lines 310, 312 each indicate an elongated optical element (e.g., a lenticular) that is slanted with respect to the display panel. The left line 310 runs through the middle of the upper measurement area 300, while the right line 312 runs through the middle of the lower measurement area 301. The double arrow indicates the horizontal distance between the elongated optical elements. For reference, a dashed line with the same slant ('center line') is shown running through the center of the display panel. If for example the phase in both measurement areas 300, 301 is the same, this may imply that the distance between the elongated optical elements (the width of the double arrow) is an exact multiple of the pitch distance, and the multiple corresponds to the elongated optical elements between the left and right lines 300, 301. A change in pitch distance, for example due to the distance between consecutive elongated optical elements expanding or contracting around the center line, may cause the phase difference to no longer be an exact multiple of the pitch distance. In such a situation, any observed difference in phase between the two measurement areas 300, 301 may be due to a mismatch in slant, but also due to a mismatch in pitch distance.

**Fig.** 6 shows the determination of the slant using measurement areas which are horizontally and vertically offset in accordance with a nominal value of the slant. This figure may be further explained as follows. As elucidated elsewhere, it may be advantageously to decouple the measurement of the slant and the measurement of the pitch distance. Advantageously, such decoupling may be obtained when the at least two measurement areas 300, 301 are positioned along the approximate direction of the slant. This approximate direction may elsewhere be referred to as the initial estimated value of the slant, and may be obtained from, e.g., a manufacturing or design specification. As such, the measurement areas 300, 301 may be positioned along a line which is slanted by the value of the initial estimated value of the slant, as indicated in Fig. 6 by the angle θ°. By offsetting the measurement areas 300, 301, the phase measurements may be obtained from the same optical element or a same group of optical elements, or if the deviation between the initial estimated value of the slant and the actual value of the slant is larger, nearly the same optical element(s). When the measurement areas 300, 301 are positioned along such a line, a deviation in the pitch distance from its actual value may not effectuate (significant) phase differences between the top and bottom measurements. Rather, a measured phase difference between the two measurement areas may only or primarily be due to a deviation in the slant from its actual value. This way, the slant measurement may be decoupled from the pitch measurement, in that the pitch distance may be determined, e.g., in a known manner, after first having determined the slant in the above-described manner.

Various alternatives exist to the measurement of the slant as described with reference to Fig. 6. For example, the measurement areas may take another form than the rectangular form shown in Fig. 6. In a specific alternative example, a measurement area may be circular, oval, etc. Another example is that the size of the measurement area may vary. For example, the size of the measurement area may be such that the phase may be observed at multiple locations within the measurement area, which observed phases may then be combined into one value, e.g., by averaging or majority selection. However, the size may also be relatively small so that the phase is observed at only a single measurement location. Yet another example is that more than two measurement areas may be used, which measurement areas may be located on the aforementioned slanted line. The relative distance between the measurement areas may be chosen asymmetrically and/or non-equidistantly. For example, a third measurement area may be located at fraction *n*/*d* of the distance between both other measurement areas, where d is large even when all common factors in *n* and d have been removed and where the distance between the measurement areas is sufficiently large to be able to accurately measure a different phase in each measurement area. In other examples, more than three measurement areas may be used to further increase the accuracy of determining the value of the slant.

In general, the slant may be determined iteratively, for example by, if the difference between the first phase and the second phase exceeds a threshold, adjusting the estimated value of the slant based on the difference, repositioning the first position and/or the second position to adjust the offset to said adjusted estimated value of the slant, and redetermining the first phase and/or the second phase at said repositioned first position and/or second position. If the difference between the first phase and the second phase is below a threshold, the estimated value of the slant may be output as a determined slant.

With further reference to the test pattern shown on the autostereoscopic display, it is noted that the test pattern may take the form of a single image which may comprise uniquely identifiable image content for each phase of the set of assigned phases at the respective positions on the display panel. Alternatively, however, the test pattern may be a spatiotemporal or temporal test pattern in which the uniquely identifiable image content for respective phases is distributed over different images. In such a (spatio)temporal test pattern, one image may comprise uniquely identifiable test pattern for one phase while other phases may not be uniquely identifiable, and another image may comprise uniquely identifiable test pattern for another phase while again other phases may not be uniquely identifiable. For example, a first image may comprise white image content for phase zero and black image content for all other phases, while a second image may comprise white image content for phase one and black image content for all other phases, while a third image may comprise white image content for phase two and black image content for all other phases, etc. It will be appreciated that such (spatio)temporal test patterns may also allow the system and method as described in this specification to determine which phase is visible from the camera position at the respective positions on the display panel.

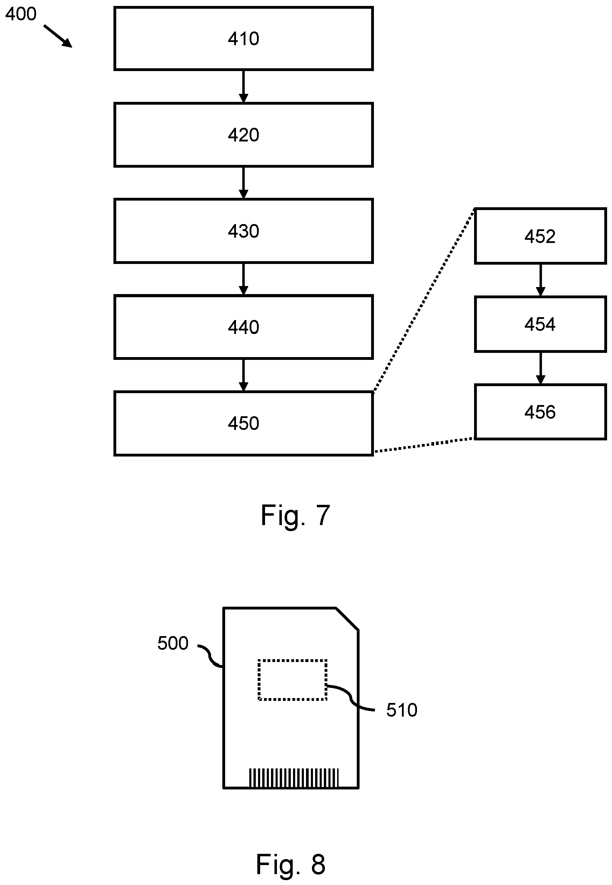

**Fig. 7** shows a method 400 for determining a slant of an autostereoscopic display. The method 400 may comprise, in a step titled "ASSIGNING PHASES TO DISPLAY ELEMENTS", assigning 410 a phase to each display element based on an estimated value for the pitch distance and an estimated value for the slant, in a step titled "GENERATING INTERLEAVED DISPLAY DATA", based on said assigned phases, generating 420 display data which comprises uniquely identifiable image content for each phase of a set of assigned phases, in a step titled "OUTPUTTING DISPLAY DATA TO DISPLAY", outputting 430 the display data to the autostereoscopic display for display, and in a step titled "CAPTURING IMAGE(S)", capturing 440 one or more images of the display panel when the display data is displayed by the autostereoscopic display. The method 400 may further comprise, in a step titled "DETERMINING SLANT BY ANALYZING CAPTURED IMAGE(S)", determining 450 the slant by analyzing said one or more captured images, wherein the analyzing of the one or more captured images comprises, in a sub-step titled "DETERMINING FIRST PHASE AT FIRST POSITION", at a first position on the display panel, determining 452 a first phase based on the uniquely identifiable image content shown at the first position, in a sub-step titled "DETERMINING SECOND PHASE AT SECOND POSITION", at a second position on the display panel, determining 454 a second phase based on the uniquely identifiable image content shown at the second position, wherein the first position and the second position are horizontally and vertically offset from each other in accordance with the estimated value of the slant, and in a sub-step titled "DETERMINING SLANT BASED ON PHASE DIFFERENCE", determining 456 the slant of the optical elements based on a difference between the first phase and the second phase. It will be appreciated that the steps of the method may be performed in any suitable order, e.g., consecutively, simultaneously, or a combination thereof, subject to, where applicable, a particular order being necessitated, e.g., by input/output relations

In general, each entity described in this specification may be embodied as, or in, a device or apparatus. The device or apparatus may comprise one or more (micro)processors which execute appropriate software. The processor(s) of a respective entity may be embodied by one or more of these (micro)processors. Software implementing the functionality of a respective entity may have been downloaded and/or stored in a corresponding memory or memories, e.g., in volatile memory such as RAM or in non-volatile memory such as Flash. Alternatively, the processor(s) of a respective entity may be implemented in the device or apparatus in the form of programmable logic, e.g., as a Field-Programmable Gate Array (FPGA). Any input and/or output interfaces may be implemented by respective interfaces of the device or apparatus. Each functional unit of a respective entity may be implemented in the form of a circuit or circuitry. A respective entity may also be implemented in a distributed manner, e.g., involving different devices or apparatus.

It is noted that any of the methods described in this specification, for example in any of the claims, may be implemented on a computer as a computer implemented method, as dedicated hardware, or as a combination of both. Instructions for the computer, e.g., executable code, may be stored on a computer-readable medium 500 as for example shown in Fig. 8, e.g., in the form of a series 510 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, etc. Fig. 8 shows by way of example a memory device 500.

Examples, embodiments or optional features, whether indicated as nonlimiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of' when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method (400) for determining a slant of an autostereoscopic display,
the autostereoscopic display comprising:
- a display panel comprising an array of display elements; and
- an array of elongated optical elements for redirecting light emitted by the display elements in mutually different directions, the optical elements being mutually arranged substantially in parallel at a pitch distance and oriented with their main longitudinal axis at a slant relative to the array of display elements;
the method comprising:
- assigning (410) a phase to each display element based on an estimated value for the pitch distance and an estimated value for the slant, wherein the phase is indicative of a direction in which the light emitted by the respective display element is redirected;
- based on said assigned phases, generating (420) display data which comprises uniquely identifiable image content for each phase of a set of assigned phases;
- outputting (430) the display data to the autostereoscopic display for display;
- capturing (440) one or more images of the display panel when the display data is displayed by the autostereoscopic display;
- determining (450) the slant by analyzing said one or more captured images, wherein the analyzing of the one or more captured images comprises:
- at a first position on the display panel, determining (452) a first phase based on the uniquely identifiable image content shown at the first position;
- at a second position on the display panel, determining (454) a second phase based on the uniquely identifiable image content shown at the second position, wherein the first position and the second position are horizontally and vertically offset from each other in accordance with the estimated value of the slant; and
- determining (456) the slant of the optical elements based on a difference between the first phase and the second phase.

2. The method (400) according to claim 1, wherein the first phase and the second phase are each determined based on the uniquely identifiable image content in respective measurement areas at the respective positions on the display panel.

3. The method (400) according to claim 2, wherein the first phase and the second phase are each determined based on an average or majority selection of the uniquely identifiable image content in the respective measurement areas.

4. The method (400) according to any one of claims 1 to 3, wherein the first position and the second position are positioned in respectively:
- a top half and a bottom half of the display panel, preferably in a top third and a bottom third of the display panel, more preferably in a top quarter and a bottom quarter of the display panel; or
- a left half and a right half of the display panel, preferably in a left third and a right third of the display panel, more preferably in a left quarter and a right quarter of the display panel.

5. The method (400) according to any one of claims 1 to 4, wherein the slant is determined iteratively by:
- if the difference between the first phase and the second phase exceeds a threshold:
adjust the estimated value of the slant based on the difference;
reposition the first position and/or the second position to adjust the offset to said adjusted estimated value of the slant; and
redetermine the first phase and/or the second phase at said repositioned first position and/or second position;
- if the difference between the first phase and the second phase is below a threshold, output the estimated value of the slant as a determined slant.

6. The method (400) according to claim 5, further comprising, at one or more intermediate positions between the first position and the second position, determining one or more intermediate phases based on the uniquely identifiable image content shown at the one or more intermediate positions, wherein the difference is a difference measure applied to the first phase, the second phase and the one or more intermediate phases.

7. The method (400) according to claim 6, wherein the one or more intermediate positions are asymmetrically positioned between the first position and the second position.

8. The method (400) according to any one of claims 1 to 7, further comprising determining the pitch distance based on said determined slant.

9. The method (400) according to claim 8, wherein determining the pitch distance comprises:
- reassigning a phase to each display element based on the estimated value for the pitch distance and the determined slant;
- based on the reassigned phases, generating further display data which comprises uniquely identifiable image content for each phase of a set of the reassigned phases;
- outputting the further display data to the autostereoscopic display for display;
- capturing one or more further images of the display panel when the display data is displayed by the autostereoscopic display;
- determining the pitch distance of the optical elements by analyzing said one or more further captured images, wherein the analyzing of the one or more further captured images comprises:
- at a first further position on the display panel, determining a first further phase based on the uniquely identifiable image content shown at the first further position;
- at a second further position on the display panel, determining a second further phase based on the uniquely identifiable image content shown at the second further position, wherein the second further position is offset from the first further position;
- determining the pitch distance of the optical elements based on a difference between the first further phase and the second further phase.

10. The method (400) according to claim 9, wherein the offset between the first further position and the second further position differs horizontally from the slant.

11. The method (400) according to any one of claims 1 to 10, wherein the uniquely identifiable image content comprises a different greyscale and/or a different color for each phase of the set of assigned phases.

12. The method (400) according to any one of claims 1 to 11, further comprising obtaining the estimated value of the slant and/or the estimated value of the pitch distance from a target specification used for the manufacture of the autostereoscopic display.

13. The method (400) according to any one of claims 1 to 12, wherein the array of elongated optical elements is a lenticular lens sheet.

14. A transitory or non-transitory computer-readable medium (500) comprising data (510) representing instructions arranged to cause a processor system to perform the method according to any one of claims 1 to 13.

15. A system (200) for determining a slant of an autostereoscopic display (140),
the autostereoscopic display comprising:
- a display panel (150) comprising an array of display elements; and
- an array of elongated optical elements (160) for redirecting light emitted by the display elements in mutually different directions, the optical elements being mutually arranged substantially in parallel at a pitch distance and oriented with their main longitudinal axis at a slant relative to the array of display elements;
the system comprising:
- a display output interface (260) to the autostereoscopic display;
- a camera interface (240) to a camera positioned to capture images of the display panel of the autostereoscopic display;
- a processing subsystem (220) configured to:
- assign a phase to each display element based on an estimated value for the pitch distance and an estimated value for the slant, wherein the phase is indicative of a direction in which the light emitted by the respective display element is redirected;
- based on said assigned phases, generate display data which comprises uniquely identifiable image content for each phase of a set of assigned phases;
- via the display output interface, output the display data (262) to the autostereoscopic display for display;
- via the camera interface, capture one or more images (252) of the display panel when the display data is displayed by the autostereoscopic display;
- determine the slant by analyzing said one or more captured images, wherein the analyzing of the one or more captured images comprises:
- at a first position (300) on the display panel, determining a first phase based on the uniquely identifiable image content shown at the first position;
- at a second position (301) on the display panel, determining a second phase based on the uniquely identifiable image content shown at the second position, wherein the first position and the second position are horizontally and vertically offset from each other in accordance with the estimated value of the slant; and
- determining the slant of the optical elements based on a difference between the first phase and the second phase.
